# EUROPEAN PATENT APPLICATION

(11) **EP 4 697 060 A1**
(43) Date of publication of application: **18.02.2026**
(21) Application number: 24195074.0
(22) Date of filing: 16.08.2024
(51) Int. Cl.: G01S 7/35, G01S 7/41, G01S 13/88, G01S 13/536, G01S 13/56, G01S 13/04, G01S 13/538, G01S 13/02, G01S 13/86

(54) **METHOD FOR PRE-PROCESSING RADAR DATA FOR FURTHER PROCESSING BY A MACHINE LEARNING MODEL TO GENERATE A CONTROL SIGNAL FOR CONTROLLING A DEVICE**

(71) Applicant: Innatera Nanosystems B.V., 2289 EX Rijswijk (NL)
(72) Inventor: NAGY, Sebastian Eusebiu, 2289 EX Rijswijk (NL); KOZDON, Katarzyna Weronika, 2289 EX Rijswijk (NL); STEINBERG, David, 2289 EX Rijswijk (NL); KANYA, Simeon, 2289 EX Rijswijk (NL); MAKSIMIUK, Dariusz, 2289 EX Rijswijk (NL)
(74) Representative: Hoyng Rokh Monegier B.V.

(57) **Abstract**

The present invention discloses a method for pre-processing radar data for further processing by a machine learning model, the method comprising: acquiring radar data from a transmitted signal and a received signal of a radar, wherein the radar data comprises frames and/or chirps; allocating the radar data to a plurality of frequency range bins according to the radar frequency of radar data of the received signal; calculating a difference between the radar data at two or more different time steps for each of the plurality of frequency range bins, wherein the time steps correspond to the frames or chirps of the radar data; and providing the calculated differences to the machine learning model with temporal dynamics for further processing.

## Description

### TECHNICAL FIELD

This disclosure generally relates to pre-processing of radar data for further processing by a machine learning model for efficient automated target recognition, which may be used to generate a control signal to control a device, such as (but in no way limited to) a smart doorbell. More specifically, but not exclusively, the disclosure relates to a system and method for pre-processing of received radar signals for human presence detection recognition using a machine learning model with temporal dynamics. Upon human presence detection, a control signal may be generated that may be transferred to a device, such as a smart doorbell, which may e.g. be used to generate a notification that a person is present in the vicinity.

### BACKGROUND

A smart doorbell is a device which monitors an entrance area, e.g. a front door area, of a building, typically using an infrared (IR) camera, and alerts the owner if a person is present in the vicinity. Functionality can be extended by inclusion of a microphone and speaker for communication between the homeowner and a visitor, and security-improving features such as turning light on and producing alert sound to discourage intruders. With more extensive AI use, facial recognition can be used to recognize authorized people and unlock the door for them.

Current smart doorbell solutions rely heavily on camera-based "motion" detection as a surrogate for human presence. In result, false positives are triggered by events such as change in lighting conditions, wind-triggered movements, rain, and dust on the lens. Detections are also triggered by insects. Coincidentally, IR cameras, which are used to enable monitoring in poor lighting conditions, attract insects.

Mitigation strategies include use of multiple sensors, especially passive infrared (PiR) and radar, which rely on proximity and temperature. Overall, this leads to an increase in the Bill of Materials and power while still relying on extremely basic, error-prone proxies for human presence.

Lack of detection reliability has a major negative impact on user experience. This impact is mostly reported as unnecessary, false alerts. However, it further extends to filling up data storage with irrelevant footage, and reduction of battery life, as discussed next.

Smart doorbells can be wired or battery-operated. Battery-operated devices have a much reduced barrier to adopt, especially in rental properties.

Smart doorbell users report much lower battery lifetimes than those advertised. Battery life of a device is estimated based on the predicted workload, including how often detections are likely to happen for a given application. The current rate of false alarms has a user-perceptible negative impact on the battery longevity. Charging batteries becomes another chore, and is particularly inconvenient for devices which need to be taken down for charging.

Smart doorbells commonly rely on internet connectivity. This reliance is likely to grow further with the increasing use of AI in the cloud. Rural areas may suffer from unreliable and slow internet connection. Lack of reliability would result in poor user experience, decreasing the market adoption. While AI models can be run locally, the feasibility of this solution relies heavily on the power efficiency of their implementation, especially for battery-operated smart doorbells.

The existing smart doorbell solutions are commonly triggered by movement. This leads to decreased reliability of human presence detection due e.g. to an increase in false positives.

Radar uses radio waves to determine the distance (ranging), angle (azimuth and elevation), and radial velocity of objects relative to the radar system site. Radar is typically used to detect and track flying aircraft, spacecraft, missiles, etc. and to map weather formations and terrain. Recently small radar systems have also been used to detect object movements such a hand gestures for hands-free control of devices such as televisions.

A radar system consists of a transmitter producing electromagnetic waves in the radio or microwaves domain, a transmitting antenna, a receiving antenna (the same antenna can be used for transmitting and receiving) and a receiver and processor to determine properties of the objects. Radio waves (pulsed or continuous) from the transmitter reflect off the objects and return to the receiver, giving information about the objects' locations and speeds.

Automated target recognition using machine learning models have been used for gesture recognition for hands-free control of devices. In previously proposed systems, the pre-processing of data for input to such machine learning models has involved the generation of spectrograms of data derived from the received radar signals. Examples of spectrograms used for these applications include range-Doppler, micro-Doppler, range-angle and angle-Doppler. These spectrograms comprise a rectangular map of the relevant features against a time axis.

In case of range-Doppler, creation of a spectrogram requires computation of range profiles and Doppler (radial velocity) profiles to generate a range-Doppler surface comprising a large set of data representing variation in features such as range and velocity with time. This involves the storing and processing of a constant number of samples into a joint 2D representation of the selected features. This spectrogram-based approach requires a large computational and memory load which remains constant regardless of the input data, imposing a constant drain on the memory and power of the data pre-processing system. The same limitations also apply when extending from 2D to multi-dimensional representation, e.g. range-Doppler-angle.

### SUMMARY

To address the above discussed drawbacks of the prior art, the present invention is proposed. The attached claims determine the scope of protection of this patent.

The invention provides a radar and a processor system implementing a processing pipeline for processing the radar data, the processing pipeline including a machine learning model, which allows for detection of signatures of human presence regardless of movement and at low power and data storage requirements. The invention achieves this by preprocessing temporal radar data and feeding the resulting data to a machine learning model, such as a spiking neural network. Spiking Neural Networks (SNNs) excel at extracting patterns from spatio-temporal data. Each neuron and weight contains time-weighted traces of the past samples, with the network being trained to combine them to efficiently turn sensor data into information and action.

The combination of a radar and a machine learning model, preferably a spiking neural network, enables realization of an ultra low power AI customer solution. The system itself operates with a low mW power envelope. However, significant power benefits are realized at the systems level, where these additional components more than pay for themselves. The radar and processing system may remain always on, scanning the environment for human presence. While the radar and processing system keeps the watch, more power hungry components of e.g. the doorbell, including the camera, can be put into sleep. Upon detection of human presence, the output of the machine learning model can be used to coordinate the desired actions such as waking up other system components, alerting the home owner and triggering camera recording.

The proposed setup significantly extends the battery life of the doorbell thanks to the low average power combined with robust, motion-resistant human presence detection with a low rate of false alarms and, consequently, a lower frequency of waking up other system components. Thanks to the always on mode, these power benefits are realized without compromising detection latency.

Unlike the PiR sensor, radar does not have a protruding lens; it functions well even when covered with a wide range of materials. This, together with a small footprint of the radar and machine learning models chips, empowers the OEM (original equipment manufacturer) to deliver a technologically cutting edge solution without compromising the aesthetics or buildability of the design.

In one aspect, a method is provided for pre-processing data for further processing by a machine learning model. The pre-processing comprises generating data from a transmitted signal and a received signal over a time period and allocating the sample data to a plurality of frequency range bins. The differences between radar data at different time steps are then calculated for each of the frequency range bins, and the calculated differences are provided to a machine learning model.

Each frequency range bin may comprise sample data for a respective subrange of the frequency range of the transmitted signal. In this way, the range bins may include the sample data arranged in accordance with the range to which the sample data relates.

In another aspect, a system is provided for pre-processing data for further processing by a machine learning model with temporal dynamics. The system is arranged to acquire radar data from a transmitted signal and a received signal over a time period. The system comprises a processor which allocates the radar data to a plurality of frequency range bins according to the radar frequency of radar data of the received signal. The processor is arranged to then calculate a difference between the radar data at two or more different time steps for each of the plurality of range bins, and provide the calculated difference to a machine learning model with temporal dynamics for further processing.

The processor may comprise a microprocessor, ASIC, FPGA, or combination of these and other circuits. The term "processor" may encompass multiple processors, each designed to perform distinct functions. For example, one processor might be dedicated to executing Fast Fourier Transforms (FFT) for signal analysis, while another processor is specialized in implementing machine learning models for advanced data interpretation. These processors can operate within the same module or be distributed across separate modules, depending on the system's architecture and design requirements. This modular approach allows for the integration of various processing tasks, enhancing the overall functionality and flexibility of the radar system.

The system may also comprise a memory, which may be implemented as a block of memory or as distributed memory elements. The system may further comprise a sensor comprising one or more transmit antennas and one or more receive antennas, the sensor generating the receive signal from the one or more receive antennas. The system may further comprise a processor implementing a machine learning model. The system including the sensor and machine learning model may be integrated in a single semiconductor chip.

### BRIEF DESCRIPTION OF DRAWINGS

Embodiments will now be described, by way of example only, with reference to the accompanying schematic drawings in which corresponding reference symbols indicate corresponding parts, and in which:

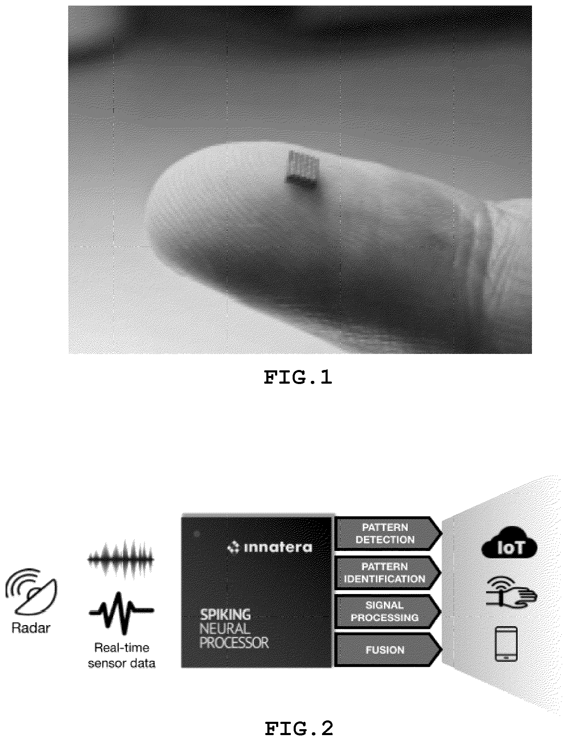

FIG. 1 is an example of a spiking neural network processor.
FIG. 2 is a schematic diagram of an example the method for pre-processing radar data for a machine learning model, the machine learning model being given in this case by a preferred embodiment comprising a spiking neural network, the output of which is used to control any of a variety of devices.

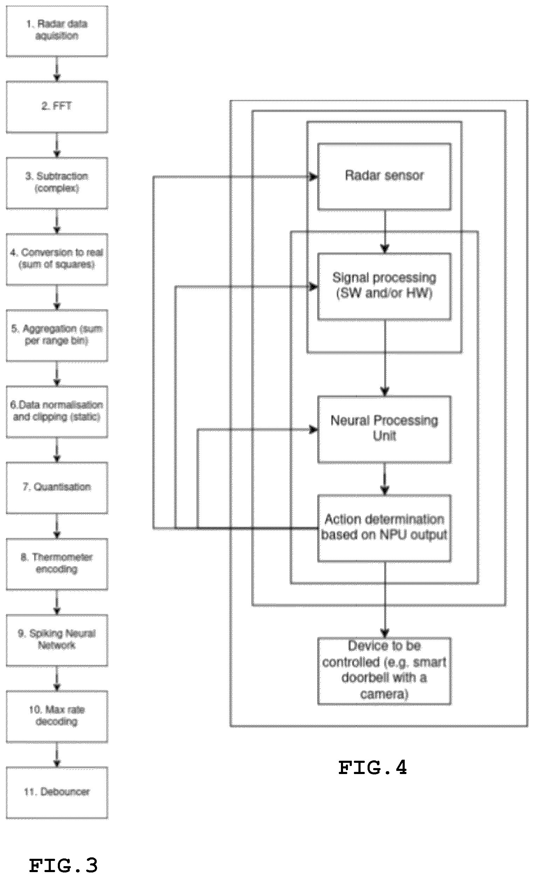

FIG. 3 is a flow diagram showing an example of radar data pre-processing for a machine learning model.
FIG. 4 is a schematic diagram showing an embodiment of a system comprising a radar of which the data is pre-processed for further processing by a machine learning model, the result of which is used to generate a control signal sent to a device to be controlled.

The figures are intended for illustrative purposes only, and do not serve as restriction of the scope or the protection as laid down by the claims.

### DESCRIPTION OF EMBODIMENTS

Hereinafter, certain embodiments will be described in further detail. It should be appreciated, however, that these embodiments may not be construed as limiting the scope of protection for the present disclosure.

This invention introduces a robust human detection solution intended as an always on wake-up system for the traditional camera-based smart doorbell. The solution comprises for example of a radar and a spiking neural network, for example a 60 GHz Continuous Wave Frequency Modulated (FMCW) radar, and a Spiking Neural Processor T1 created by Innatera. The radar enables acquisition of high-resolution data describing the environment in 3D. From this data, one can extract information about static and dynamic characteristics of the environment and targets within it such as target types, locations, sizes and speeds of movement of various targets. Other radar systems can also be used. The T1 Spiking Neural Processor is designed to be sufficient as the first and only chip a sensor talks to. The T1 incorporates Neural Processing Units and a lightweight RISC-V CPU to provide application developers with a heterogeneous platform for sensor data processing and action coordination. Other neural processing chips can also be used.

Here, the term "always on" means that the sensor and AI work at a frequency appropriate for the application and/or delays are not perceptible to a human user. Both radar and microprocessor may be put into sleep when not actively in use to minimise power draw. However, the duration of sleep may be much shorter than that of e.g. a camera linked to the system, and the frequency with which the radar and AI wake up will be much higher, so as to frequently monitor the space, while camera and other systems would wake up e.g. only when a person is detected.

The radar and processing system solution relies on detecting the signatures of human presence regardless of movement. This robust human presence detection is achieved because Spiking Neural Networks (SNNs) excel at extracting patterns from spatio-temporal data. Each neuron and weight contains time-weighted traces of the past samples, with the network being trained to combine them to efficiently turn sensor data into information and action. The exemplary T1 Spiking Neural Processor provides a highly efficient hardware implementation of the SNNs. The Machine Learning pipeline was trained and extensively tested on a large body of data capturing real world application scenarios. The dataset was carefully crafted to enable development and optimization of low-latency true human presence detection with a low rate of false positives. Consequently, the pipeline delivers >99% accuracy on traditionally error-prone scenarios containing non-human movement.

Human presence is detected even if a person stands still. Conversely, non-human movement, such as bushes moving in the wind, may not trigger a detection.

The combination of the radar and neural processing chip, for example the T1 microprocessor enables realization of an ultra-low power AI customer solution. The system itself operates with a low mW power envelope. However, significant power benefits are realized at the systems level, where these additional components more than pay for themselves. The radar and processing system may remain always on, scanning the environment for human presence.

While the radar and processing system keeps the watch, more power-hungry components of the doorbell, including the camera, can be put into sleep. Upon detection of human presence, the neural processing chip, for example the T1 RISC-V can be used to coordinate the desired actions such as waking up other system components, alerting the homeowner and triggering camera recording.

The proposed setup significantly extends the battery life of the doorbell thanks to the low average power combined with robust, motion-resistant human presence detection with a low rate of false alarms and, consequently, a lower frequency of waking up other system components. Thanks to the always on mode, these power benefits are realized without compromising detection latency.

Unlike the PiR sensor, radar does not have a protruding lens; it functions well even when covered with a wide range of materials. This, together with a small footprint of the radar and neural processing chip, empowers the OEM to deliver a technologically cutting-edge solution without compromising the aesthetics and buildability of the design. Because of the small and convenient foodprint, the system can be built in any location.

The radar and processing system solution includes a user-adjustable embedded AI pipeline. Parameters such as detection range and sensitivity are exposed, and can be adjusted without the need for network retraining, and without the requirement for AI or embedded systems knowledge. Customers requiring a high level of customisation can adjust the pipeline and retrain the AI model using a Software and Embedded Development Kit.

With the growing use of sensors and AI in smart home products like doorbells, the cost of the electronic components as a proportion of the price keeps increasing. Profit margins can be improved by reusing the same components in more than one role. Such a reuse also decreases the risk and cost of component integration.

The combination of radar and neural processing chip such as the T1 Spiking Neural Processor is particularly suitable for such a reuse. Radar is an active sensor, with adjustable operating range and resolution. Thanks to RISC-V, T1 can be programmed to execute more than one application. These applications can use the same or different radar settings; switching between the settings and applications can be based on the AI results. Further, T1 is compatible with a wide range of other sensors, including sensor fusion. Any other neural processing chip that is reconfigurable and reusable in this way can also be used.

Accurate and robust human presence detection not only enhances the value of many existing applications but also paves the way for new ones. Some applications of the present invention include: complex power management of devices, devices such as TVs and personal computers can rapidly be put to sleep when no one is present, depth of sleep can be controlled based on human proximity to provide balance between power saving and response latency; smart buildings, person's comfort can be maximized while bills and environmental impact minimized by adjusting temperature, airflow and lighting based on which areas are occupied; sound optimization, sound can be optimized for the area of human presence to improve the listener's audio experience and reduce noise pollution outside the identified zone; automotive in and outside the cabin, detection of human presence is required for such key applications like Rear Occupant Alert System and Child Presence Detection, it preserves health and life when used for alerting the driver about people left in a locked car, reminding passengers about seatbelts, and providing location information that can be used to adjust airbag deployment parameters, car security can be enhanced through intruder detection systems; interactive displays, screens can turn on and change in response to human proximity, touch free interface can be realized thanks to the already present radar and processor chip.

In a market where demands for smart products clash with the need for green transformation, the present invention provide a solution. The combination of a versatile radar sensor and a powerful microprocessor is tailored for delivering real-time data analysis and AI-driven actions in a low mW power envelope. This joint design empowers OEMs to join the edge AI revolution quickly and without compromising on meeting the environmental targets. The radar and processing system solution for human presence detection increases the value proposal for products such as smart doorbells, TVs, and many others.

The embodiments described hereafter comprise embodiments of a method for preprocessing radar data for a machine learning model, the output of which may be used to control a device. The embodiments of said method described hereafter may be used in the operation of a system such as described previously, including smart doorbell systems and other examples.

As a first step, radar data acquisition may be performed.

The type of radar used should enable gathering of data on both static and moving targets. Typically, this would be a Frequency Modulated Continuous Wave Radar, but can apply to Ultra-Wide Band radar. The method can be applied to a radar with any number of receiving antennas. The method can be applied to a radar with any number of transmitting antennas, assuming additional computation steps applied to obtain range-based information in

Radar frequency used would typically be around 60 GHz. Use of other frequencies is possible with the proposed method, and can include e.g. 24 GHz, or Ultra Wide Band range, which typically is between 3 and 10 GHz.

Radar data may be acquired in an analog or digital domain. Data dimension is described by the number of frames F, chirps CH, and samples S, where the F, CH and S are non-negative integers.

Next, a calculation of range-based information may take place.

Acquired radar data comprises amplitude and phase data, which may be expressed by complex numbers comprising a real and an imaginary component.

Radar data is transformed to a format which represents radar information per range or range bin. This is typically achieved using Fourier Transform (FT), e.g. Fast Fourier Transform. The FT parameters such as the number of points can be selected as required. Windowing (e.g. but not limited to Blackman, Hann and Hamming) and zero-padding can be applied to the data before the FT calculation.

Operating in a range domain is a benefit that the method provides for the application. It allows the end user of a device implementing the proposed method to specify range-based requirements such as the range(s) of interest and range-based weighting. User requirements can be easily met by applying the steps of the proposed method or additional modifications (such as weighting) as required to the selected range.

A temporal difference in radar data is calculated in the complex domain, i.e. by separately calculating the difference in the real and imaginary components of the radar data. Calculating the difference may consist of a simple subtraction of one complex number from the other, where the two aforementioned complex numbers represent the radar data at a first time step and a last time step. The first and last time steps are the delimiting time steps for the time interval for which the difference is calculated. time steps can correspond to frames or chirps that are consecutive (*td* = *te* + 1), or non-consecutive (*td* = *te* + *x*). The difference can be calculated using complex subtraction. We write *Real Signal(first)* to refer to the real part of the signal for the first time step, *Real Signal(last)* to refer to the real part of the signal for the last time step, *Imaginary Signal(first)* to refer to the imaginary part of the signal for the first time step, and *Imaginary Signal(last)* to refer to the imaginary part of the signal for the last time step. Time steps can correspond to frames or chirps that are consecutive or non-consecutive. The difference can be calculated for more than one pair of time steps. E.g. *td = te* + *x* and *td = te* + *y*. The difference can be calculated as given below, or using another method for calculating complex subtraction:

### R = Real Signal(first) - Real Signal(last)

### I = Imaginary Signal(first)- Imaginary Signal(last)

This step contributes to the benefits realised with the method we propose. Experimental results show that calculation of the difference in the complex domain is beneficial as, among other things, it improves representation of movements, sensitivity to micro movements and vital signs. Ability to calculate the difference for more than one time step size allows a straightforward extension of the method to multi-timescale representation.

The main benefit can be that including this step of complex subtraction of data allows the network to generalise better; for example, the network removes static signals coming from the surroundings from the data, and leaves the signal of interest.

Note that while the pre-processing may include the step of subtraction (preferably in the complex domain), and thus while it relies on differences between radar data at different time steps, the human detection performed using the pre-processed radar data is not movement based in a conventional manner, i.e. it does not rely on macro movements from humans or using any delta (with or without a decision threshold) as a proxy for human presence.

Known solutions are triggered using macro movements or using a delta as a proxy for human presence. For example, when lights go off and the light is triggered by a movement sensor, one needs to go up or wave hand to turn them back on. It is also common for devices to be triggered by any type of movement/change, with no discrimination regarding what kind of movement it is. For "human presence" applications, radar-based solutions indicate "presence" when anything changes in the signal (above a certain threshold), thermal solutions are triggered by changes in temperature caused by the sun, camera solutions are triggered by change of lighting or any moving object.

For the present solution, it is not sufficient for movement to be present, and it is not required for a macro-movement to be present. Even without macro-movements, there is a lot of motion present in the internal organs, micro-motions from not being able to be truly perfectly still, and, importantly for our networks, there is also a history of the spatio-temporal data at that location. Sensor type, sensor settings and signal processing can extract and preserve these for the application pipeline to be able to benefit from their presence.

The two-dimensional data comprising the amplitude in phase data in complex number form may then be converted to the real-number domain. A typical operation applied here is calculation of the signal magnitude as follows: √(*R*² + *I*²). Depending on the computational requirements and hardware support, an alternative version, e.g. omitting applying the square root, can be used.

Data can be aggregated e.g. by calculating sum or average of a range bin per frame. This is an optional but beneficial step which reduces data dimensionality and improves signal to noise ratio.

Data can be normalised based on static or dynamic parameters. Parameters include mean, standard deviation, min and max and interquartile ranges of the dataset or its subset, e.g. data describing a particular prediction class. Parameters can also include statistics describing relations between classes, e.g. value halfway between the means of the classes, or other value at which separation between the classes is the largest. Static parameters can be calculated based on the statistics of the data gathered in advance. Dynamic parameters can be fully or partially adjusted during the operation of the pipeline. Examples include calculation of mean with a time-weighted contribution of the current and past mean samples. The further in the past samples were collected, the lower their contribution. The desirable discounting function can be applied, including linear, exponential and step function.

Normalisation parameters are calculated and applied per range bin. Signals in further ranges tend to have smaller magnitude; this range-based treatment improves the use of the available data range. It also results in a more equal contribution of data from each range to the neural network inputs in the later steps of the pipeline. Range-based weighting is therefore not a side effect of the signal loss over distance. Range-based weighting remains a possible result of later steps, including but not limited to network training, which maximises accuracy and therefore realises benefits at the application level, and user specification, which brings the benefit of application being user-customisable.

An example of the normalisation step includes division of the data by a parameter like the max for the corresponding range, then clipping it within bounds to avoid overflows if the sample comes from a distribution not captured by the assumed max. Further, this can be extended to separate treatment of positive and negative values, with max being used for positive values and (negative) minimum for negative values; the clipping bounds can similarly be defined separately for positive and negative value ranges. Normalisation is applied to improve the utilisation of the available data range available on the hardware.

Data quantisation can be applied to the data in a way that results in a linear or non-linear transformation. A linear transformation includes a simple mapping of the value range onto the quantisation range, and changing data representation to the quantised one with a lower resolution than the original one. A non-linear transformation includes assigning more quantisation bins to data ranges which contain a large proportion of the sample values and/or more information, e.g. data ranges associated with class overlap. Conversely, fewer quantisation bins can be assigned to data ranges that:
i. Contain a small proportion of the sample values and/or;
ii. Contain mostly background data, e.g. values around the noise level. Quantisation can be implemented using a lookup table. Quantisation is applied to improve the utilisation of the available data quantisation available on the hardware.

Data encoding is an optional but beneficial step, and whether it is required depends on the type and hardware implementation of the neural network used in the next step. Encoding is necessary for networks expecting a "spiking" data representation as an input, where "spiking" means representing data in a sparse, event-based format, using both timing and value to encode the original value.

An example of encoding is thermometer encoding. When using this method, a time window for representing an input is defined. Multiple inputs can be processed in parallel, typically using time windows of the same length, and with the same start/end time. The time window is composed of time steps, where each time step can accommodate a spike event. The larger the input value, the more consecutive time steps contain spikes. This resembles filling of a scale in an analog thermometer. In the method, the encoding range corresponds to the quantisation range. The encoding step contributes to the benefits realised using the proposed method. It creates a sparse, event-based data representation therefore reducing the amount of memory and network activations required.

The pre-processed data is transferred to a machine learning model. The method is not network type or architecture-specific, but benefits are more fully realised when the selected network has a spatio-temporal data representation. This includes recurrent networks, long-short-term memory networks and spiking neural networks. Further benefits are incurred when the machine learning model has a sparse activation pattern, where integration and/or activation does not have to be calculated for all neuronal units at each forward pass. This includes spiking neural networks. A preferred implementation is realised using spiking neural networks.

Spiking Neural Networks (SNNs) are a type of neural network that more closely mimics the way biological neurons communicate. Unlike traditional neural networks, where neurons output continuous values, SNNs operate using discrete spikes or events. These spikes represent neuronal firing and can encode temporal information. SNN implement memory capabilities in various ways. SNNs can encode and process temporal patterns directly through the timing of spikes. This allows SNNs to remember the sequence and timing of events. Spike-Timing Dependent Plasticity is an exemplary learning rule used in SNNs where the timing difference between spikes of connected neurons affects the strength of their synaptic connections. This mechanism helps SNNs retain and learn temporal patterns over time. A further example that can be used is a gradient-based method with surrogate gradients to train the SNN. An example of a gradient-based method applied to SNNs is Backpropagation Through Time. Finally, some SNNs can maintain a state of activity for a certain period, which allows them to retain information for short durations even after the initial stimulus has passed.

Recurrent Neural Networks (RNNs) are designed to recognize patterns in sequences of data by utilizing internal states to process sequences. They have connections that loop back, allowing them to maintain a form of memory about previous inputs. RNN's memory capabilities can be implemented in various ways. For example, RNNs use their internal state (or hidden state) to remember information from previous time steps. This state is updated as new data is processed, which allows the network to maintain temporal context. RNNs are capable of learning dependencies across different time steps in the sequence, making them suitable for tasks where context from earlier in the sequence influences the current output. Finally, traditional RNNs can suffer from vanishing and exploding gradient problems, which affect how well they can retain information over long sequences. Specialized variants like LSTMs and GRUs (Gated Recurrent Units) are developed to address these issues.

Long Short-Term Memory Networks (LSTMs) are a specific type of RNN designed to overcome the limitations of traditional RNNs, particularly the vanishing gradient problem. LSTMs have a more complex architecture with specialized units that help them retain information over longer periods. LSTMs have a cell state that runs through the entire network and is modified by various gates. This cell state acts as a memory buffer that can retain information for long periods. LSTMs use three types of gates-input gate, forget gate, and output gate-to control the flow of information into, out of, and within the cell state. These gates regulate how much information is retained or forgotten at each time step. Due to their design, LSTMs can capture long-term dependencies and maintain context over extended sequences, making them effective for tasks requiring the model to remember information across many time steps.

The machine learning model can thus be configured with memory capabilities to the radar data, wherein the memory capabilities are provided by at least one of a Spiking Neural Network (SNN), a Recurrent Neural Network (RNN), or a Long Short-Term Memory (LSTM) network.

The pipeline can be trained to recognise any kind of spatio-temporal signature. It can for example include different kinds of human activity, animals, adult vs child, or objects. The machine learning model neds to be trained with labelled data. The pipeline can be used for different applications by adjusting the hyperparameters and network training.

The decoding operation which may be required depends on the type and hardware implementation of the neural network used in the previous step. If the preferred approach was chosen and therefore a spiking network was used, the spiking output is converted into a class prediction. Methods to perform this operation include mapping output neurons IDs to class IDs and then applying max decoding or first-to-spike decoding. In max decoding, the winning class is determined based on the ID of the neuron which spiked the most in a defined time window. In first-to-spike decoding, the winning class is determined based on the ID of the neuron which spiked first in a defined time window.

Optional benefits can be realised by performing additional post-decoding operations after the decoding step. Example of operations applied to the decoded output include majority vote in a window containing decoding results from more than one time step. Another example is a threshold-based vote where a certain number of predictions of a given type has to be reached in a time window described in the previous point. This threshold can be set separately for each class. Another example is a debouncing mechanism where a certain number of consecutive predictions has to be reached before the predicted class changes. This number can be set separately for each class. The count can be continuous, or can reset when a class changes.

The output of the above method, either from the decoding step or the post-decoding step described in the previous point, can also be combined with the outputs from other pipelines. These can include use of other neural network pipelines, statistical or heuristic methods.

The invention comprises a method for device control based on the output of a data processing pipeline, which includes a neural network, which detects human presence-related context from radar data. The neural network may be the main component which determines the human presence-related context. The method may be implemented on the sensor edge, where data travels between the sensor, the microcontroller or microprocessor through a physical connection or a method like Bluetooth, but preferably without the use of cloud. Similarly, the data processing and recognition of the human presence-related context may preferably take place locally and not in the cloud.

The "human presence-related context" includes in its simplest form recognition of presence or absence of at least one human. It can include recognition of: a. Range with regards to the sensor; b. Location within the space including presence in a particular spatial zone; c. The person's speed of movement; d. Performed activity, including sleeping; e. Age indication, in particular adult vs child; f. The number of people, the previously listed can be applied to each person or group; g. A non-human moving target.

The method is not a simple movement detector, unlike most of the existing solutions. It: a. Distinguishes a human from a non-human moving object such as a plant moving in the wind; b. Recognises human presence even when the person remains still.

Radar is the source of data, but does not have to be the exclusive source. Devices controlled in such a way can include: a. Smart doorbell, Detection of a person can be used to turn on a camera, control camera settings (pan, tilt, focus), start data recording or notify the owner; b. Security camera, Actions as above; c. Smart tv, Streaming can be paused/resumed based on human presence; d. Interactive display, Can be turned on/off; e. Car alarm indicating passengers not using a seat belt; f. Car alarm indicating a presence of a person in a locked car, or a child in the absence of an adult.

The example implementation is human presence detection using a 60 GHz radar and T1 microcontroller from Innatera. Data processing takes place on the sensor chip or T1. Neural network is a spiking neural network on T1. The network produces inference indicating whether at least one person is present within a certain radius. Additional operations such as majority vote in a time window can be applied to the network output. When human presence is detected, a camera is turned on. The proposed method is sensitive yet robust, does not rely on movement, and as a result reduces the number of false positives.

T1 Spiking Neural Processor from Innatera and a 60 GHz radar have exemplary been combined to enable reliable human presence detection in a mW power envelope. The solution is particularly well-suited for applications such as smart doorbells, where robustness, power efficiency, and low latency are critical. T1 is a highly programmable microprocessor. It combines a neural network engine and a nimble RISC-V processor core to form a single-chip solution for processing sensor data quickly and efficiently.

## Claims

1. A method for pre-processing radar data for further processing by a machine learning model configured with memory capabilities, the method comprising:
acquiring radar data from a received signal of a radar and preferably also from a transmitted signal of a radar, wherein the transmitted signal was transmitted by the radar into an environment of the radar, and wherein the received signal comprises the transmitted signal reflected by the environment of the radar and received by the radar, wherein the radar data comprises a series of frames over time;
allocating the radar data to a plurality of frequency range bins according to the radar frequency of radar data of the received signal;
calculating one or multiple difference between the allocated radar data at two different time steps for each of the plurality of frequency range bins, wherein the time steps correspond to the frames over time of the radar data; and
providing the calculated differences for each of the plurality of frequency range bins to the machine learning model with temporal dynamics for further processing.

2. The method of claim 1, wherein the radar data comprises amplitude and phase data which is representable in two-dimensional data format and wherein the difference is calculated separately for each of the two data dimensions of the two-dimensional data format; preferably wherein the difference is calculated in the complex domain.

3. The method of claim 1 or 2, wherein the radar data originates from a Frequency Modulated Continuous Wave Radar, or a Ultra Wide-Band radar; and/or
wherein the radar data originates from a radar operating at a frequency between 1 GHz and 100 GHz, preferably between 3 and 10 GHz or between 20 and 70 GHz, more preferably the radar operates at a frequency of 24 or 60 GHz; and/or
wherein data is acquired in an analog or a digital domain; and/or
wherein the radar data is derived from the transmitted signal and the received signal by the following steps:
mixing the received signal with a reference signal derived from the transmitted signal, thereby generating an intermediate frequency signal;
filtering the intermediate frequency signal using a low-pass filter to remove highfrequency components;
digitizing the filtered intermediate frequency signal using an analog-to-digital converter to produce a digital signal;
processing the digital signal to determine radar data, wherein the radar data preferably includes at least one of amplitude, phase, range, velocity, and/or angle data.

4. The method of any one of the preceding claims, wherein the machine learning model has a spatio-temporal data representation, preferably recurrent networks, long-short-term memory networks and spiking neural networks; and/or a sparse activation pattern, where integration and/or activation is not required to be calculated for all neuronal units at each forward pass; and/or preferably wherein the machine learning model is a spiking neural network; and/or wherein the machine learning model is configured with memory capabilities with respect to the radar data, wherein the memory capabilities are provided by at least one of a Spiking Neural Network (SNN), a Recurrent Neural Network (RNN), or a Long Short-Term Memory (LSTM) network.

5. The method of any one of the preceding claims, wherein allocating the radar data to a plurality of frequency range bins according to the radar frequency of radar data of the received signal comprises transforming radar data to a format which represents radar information per range or range bin, preferably wherein in allocating the radar data to a plurality of frequency range bins according to the radar frequency of radar data of the received signal comprises using an integral transformation, preferably a Fourier Transform, more preferably a Fast Fourier Transform and/or wherein preferably before allocating the radar data to a plurality of frequency range bins windowing and zero-padding is applied to the radar data.

6. The method of any one of the preceding claims, wherein a selection is made of one or multiple frequency range bins forming a range of interest to a user, and wherein only the selection one or multiple frequency range bins are further processed by the machine learning model; and/or wherein range-based weighting is applied per frequency range bin.

7. The method of any one of the preceding claims, wherein the difference is calculated in the complex domain or an equivalent representation using the allocated radar data, preferably obtained using the integral transformation of claim 5, and wherein the difference is calculated using complex subtraction at the two or more different time steps.

8. The method of claim any one of the preceding claims, wherein the calculated difference for each of the plurality of frequency range bins is converted to the real domain, preferably by a calculation of the signal magnitude, or the squared signal magnitude.

9. The method of any one of the preceding claims, the method further comprising data aggregation of the radar data, preferably by calculating sum or average of a range bin per frame.

10. The method of any one of the preceding claims, the method further comprising a step of data normalisation comprising the application of static and/or dynamic normalisation parameters which are calculated and applied per frequency range bin, the normalisation parameters including mean, standard deviation, min and max and interquartile ranges, or mean with a time-weighted contribution of the current and past mean samples, wherein the static parameters are calculated based on the statistics of the radar data acquired, and wherein the dynamic parameters are fully or partially adjustable during the operation of the method; wherein the normalisation parameters are calculated and applied per frequency range bin, preferably normalisation is performed by division of the radar data in a frequency range bin by the maximum value of the corresponding frequency range bin and performing clipping if the sample comes from a distribution not captured by the maximum value.

11. The method of any one of the preceding claims, the method further comprising a step of data quantisation comprising a linear and/or non-linear transformation, preferably implemented using a lookup table;
wherein the linear transformation preferably includes a mapping of the allocated radar data onto the quantisation range; and
wherein the non-linear transformation preferably includes assigning more or less quantisation bins to frequency range, wherein more quantisation bins are assigned to a frequency range if the frequency range comprises a larger proportion of the sample values and/or more information and wherein less quantisation bins are assigned to a frequency range if the frequency range comprises a smaller proportion of the sample values and/or mostly background data such as values around a noise level.

12. The method of any one of the preceding claims, wherein an additional Constant False Alarm Rate operation is applied after the allocation or calculation of the difference step.

13. The method of any one of the preceding claims, wherein after the step of allocation, range-based data can be used to calculate Angle of Arrival, and further used to determine a feature or class of interest.

14. A method of processing radar data by a machine learning model, comprising:
the method for pre-processing the radar data according to any one of claims 1-13, resulting in pre-processed calculated differences;
encoding the pre-processed calculated differences into an input having a representation that can be used by the machine learning model;
processing the input using the machine learning model, thus obtaining an output from the machine learning model, wherein the memory capabilities of the machine learning model enable the machine learning model to retain and utilize temporal information from previous radar data frames to enhance analysis;
decoding the output into a classification prediction, preferably wherein the classification prediction predicts human presence based on the radar data.

15. The method of claim 14, wherein the encoding step creates as input a sparse, event-based data representation; preferably wherein an encoding scheme used during the encoding step is thermometer encoding, comprising:
defining a time window for representing an input, composed of one or multiple time steps wherein each time step can accommodate a spike event;
processing multiple frequency range bins in parallel, concurrently or sequentially, preferably using time windows of the same length, and with the same start and end times;
obtaining time steps containing spikes, wherein the larger the input value, the more consecutive time steps contain spikes.

16. The method of claims 14 or 15, wherein the decoding step comprises converting a spiking output as the output into the class prediction, preferably by mapping output neurons IDs of the machine learning model, preferably a spiking neural network, to class IDs and
thereafter applying max decoding, wherein the winning class is determined based on the ID of the neuron which spiked the most in a defined time window, or first-to-spike decoding, the winning class is determined based on the ID of the neuron which spiked first in a defined time window.

17. The method of any one of claims 14-16, wherein the method further comprises a post-decoding step, the post decoding step comprising: a majority vote in a window containing decoding results from more than one time step; a threshold-based vote where a certain number of predictions of a given type has to be reached in the time window of claim 16, preferably wherein this threshold can be set separately for each class; and/or debouncing mechanism where a certain number of consecutive predictions has to be reached before the predicted class changes, preferably wherein this number of consecutive predictions is set separately for each class and/or wherein the count is continuous or is reset when a class changes.

18. The method of any one of claims 14-17, wherein the machine learning model uses the difference to detect a human presence.

19. A system for pre-processing radar data for further processing by a machine learning model, the system comprising a processor configured to perform the method steps of any one of claims 1-13.

20. A system for processing radar data by a machine learning model, the system comprising a processor implementing the machine learning model and configured to perform the method steps of any one of claims 14-18; preferably wherein the processor implements the machine learning model by using dedicated analog components wherein each dedicated analog component is identified with e.g. a node or connection between the nodes of the machine learning model or preferably wherein the processor implements the machine learning model by using digital components.

21. The system of claim 20, wherein the output of the machine learning model is used to generate a control signal that is transferred to an external device, generally leading to a change of state of the device; and/or
wherein the processor is integrated with a device and the output of the machine learning model is used to generate a control signal that is transferred to the device, generally leading to a change of state of the device.

22. The system of claim 20 or 21, further comprising a radar device for acquiring radar data, comprising:
a transmitter configured to transmit the transmitted signal;
a receiver configured to detect the received signal; and
a processing unit configured to extract the radar data from the received signal and preferably also from the transmitted signal.

23. The system of claim 22, wherein the system further comprises:
an activation sensor, preferably a acoustic, motion and/or optical sensor, which generates a detection signal; and
an activation processor which is configured to receive the detection signal and determines based on the detection signal whether the radar device and the processor need to be activated, wherein the determination is made such that the radar device and the processor operate when a predetermined activation condition is detected by the activation sensor;
and wherein the radar device and the processor are configured to acquire and process radar data to obtain the classification prediction.

24. The system of claim 23, wherein the activation processor is configured to generate the activation signal based on a threshold level or specific pattern identified in the detection signal from the activation sensor.

25. The system of any one of claims 20-24, wherein the device is a smart doorbell; a smart tv and/or computer; an interactive display; a sound system; a building management system, managing e.g. the temperature, airflow, and/or lighting in a building; and/or a vehicle such as a car.

26. A doorbell system arranged to detect a human presence in a target region, the doorbell system comprising:
a radar device for acquiring radar data, comprising:
a transmitter configured to emit electromagnetic signals towards the target region;
a receiver configured to detect reflected electromagnetic signals from the target region; and
a processing unit configured to extract radar data from the detected reflected
electromagnetic signals;
a system for processing the radar data by a machine learning model, preferably the system according to any one of claims 20-24;
wherein the doorbell system is configured to use the output of the machine learning model to generate a control signal that indicates that the radar device has detected a human presence in the target region, and wherein the control signal is used to take further action based on the human presence in the target region.

27. The doorbell system of claim 26, wherein the doorbell system further comprises a notification system, and wherein the further action comprises generating a notification upon detection of the human presence.

28. The doorbell system of claim 26 or 27, wherein the doorbell system further comprises a camera, and wherein the further action comprises activating the camera.

29. The doorbell system of claim 28, wherein the doorbell system further comprises:
an activation sensor, preferably an acoustic, motion and/or optical sensor, which generates a detection signal; and
an activation processor which is configured to receive the detection signal and
determines based on the detection signal whether the camera needs to be activated, wherein the determination is made such that the camera operates when a predetermined activation condition is detected by the activation sensor.
